# EUROPÄISCHE PATENTSCHRIFT

(11) **EP 3 898 239 B1**
(45) Veröffentlichungstag und Bekanntmachung des Hinweises auf die Patenterteilung: **29.10.2025**
(21) Anmeldenummer: 19831711.7
(22) Anmeldetag: 19.12.2019
(51) Int. Cl.: B32B 38/00, B32B 27/08, B42D 25/378, B42D 25/23

(54) **VERFAHREN ZUM HERSTELLEN EINES WERT- ODER SICHERHEITSDOKUMENTS ODER EINES WERT- ODER SICHERHEITSDOKUMENTENROHLINGS**
METHOD FOR PRODUCING A VALUE OR SECURITY DOCUMENT OR A VALUE OR SECURITY DOCUMENT BLANK
PROCÉDÉ DE FABRICATION D'UN DOCUMENT DE VALEUR OU DE SÉCURITÉ OU D'UNE ÉBAUCHE DE DOCUMENT DE VALEUR OU DE SÉCURITÉ

(30) Priorität: 20.12.2018 DE 102018222669
(43) Veröffentlichungstag der Anmeldung: 27.10.2021
(73) Patentinhaber: Bundesdruckerei GmbH, 10969 Berlin (DE)
(72) Erfinder: MUTH, Oliver, 12277 Berlin (DE); MAUDERER, Michael, 81825 München (DE); MATHEA, Arthur, 14199 Berlin (DE); PEINZE, Franziska, 12589 Berlin (DE)
(74) Vertreter: Patentanwälte Bressel und Partner mbB
(86) Internationale Anmeldenummer: PCT/EP2019/086438
(87) Internationale Veröffentlichungsnummer: WO 2020/127820

(56) Entgegenhaltungen:
- DE-A1- 102007 052 947
- DE-A1- 102012 209 665
- DE-A1- 102016 212 741

## Beschreibung

Die Erfindung betrifft ein Verfahren zum Herstellen eines Wert- oder Sicherheitsdokuments oder eines Wert- oder Sicherheitsdokumentenrohlings.

Wert- oder Sicherheitsdokumente werden in der Regel individualisiert oder personalisiert, um ihren Träger eindeutig zu identifizieren. Immer häufiger erfolgt eine Individualisierung bzw. Personalisierung der Wert- oder Sicherheitsdokumente auf dezentrale Weise. Dies erfolgt beispielsweise, indem ansonsten fertig ausgebildete Wert- oder Sicherheitsdokumentrohlinge dezentral mit individualisierenden bzw. personalisierenden Informationen bedruckt werden.

Bekannt ist es in diesem Zusammenhang, Wert- oder Sicherheitsdokumentenrohlinge aus Polycarbonat, beispielsweise in Kartenform, im Tintenstrahldruckverfahren mit Hilfe einer Tintenzubereitung zu bedrucken. Eine besonders zum Bedrucken von Polycarbonat geeignete Tintenzubereitung enthält ein Bindemittel mit einem Polycarbonatderivat auf Basis eines geminal disubstituierten Dihydroxydiphenylcycloalkans. Ein Verfahren zum Herstellen einer solchen Tintenzubereitung ist aus der DE 10 2007 052 947 A1 bekannt. Ferner ist eine solche Tintenzubereitung beispielsweise unter dem Markennamen POLYCORE^{®}-Ink bekannt.

Eine wesentliche angestrebte Eigenschaft aller Wert- oder Sicherheitsdokumente stellt die Fälschungssicherheit dar. Hierzu werden möglichst hohe Hürden gegen eine Fälschung und Verfälschung der Dokumente errichtet. Bei den vielen Arten der Fälschung und Verfälschung stellt eine Manipulation einer in dem Wert- oder Sicherheitsdokument ausgebildeten individualisierten oder personalisierten Information eine häufig verwendete Fälschungsmethode dar. Hierzu wird beispielsweise eine auf einer Außenseite aufgebrachte Information in Form einer Bedruckung zumindest teilweise entfernt und durch eine andere Information ersetzt.

Zum Vermeiden einer solchen Manipulation eignet sich die vorgenannte Tintenzubereitung besonders gut, da die Tintenzubereitung im Zusammenspiel mit Polycarbonat über eine besonders gute Anhaftung verfügt. Nach dem Aufdrucken lässt sich keine physische Phasengrenze zwischen der Bedruckung und der Polycarbonatschicht mehr ausmachen, sodass eine einfache mechanische Entfernung der Bedruckung von der Polycarbonatschicht nicht möglich ist. Jedoch kann die Bedruckung nach wie vor mittels eines chemischen Angriffs entfernt werden. Um einer solchen Manipulation entgegenzuwirken, ist es bekannt, als letzten Schritt nach dem Bedrucken einen Sicherheitspatch aufzubringen, welcher die Bedruckung abdeckt und hierdurch absichert. Ein solcher Sicherheitspatch kann beispielsweise ein Hologramm sein. Ebenfalls bekannt ist das Aufbringen einer Schutzfolie auf die bedruckte Oberfläche, damit eine darunterliegende Bedruckung gegen eine Manipulation geschützt ist.

Als weitere Möglichkeit der Absicherung gegen eine Manipulation ist ferner bekannt, eine zur Personalisierung vorgenommene farbige Bedruckung mittels eines Laserengraving-Schrittes abzusichern. Hierbei werden Bereiche der Bedruckung zusätzlich mittels eines Lasers graviert. Dieses Verfahren wird auch als Laser-Protected-Image (LPI) bezeichnet.

Aus der DE 10 2012 209 665 A1 ist ein Verfahren zum Individualisieren eines Sicherheitsdokuments bekannt, umfassend die Schritte: Bereitstellen eines Dokumentenrohlings, wobei der Dokumentenrohling einen Laminationskörper umfasst; Bereitstellen einer digitalen Druckeinrichtung; Bedrucken mindestens einer Außenfläche des Laminationskörpers mittels der digitalen Druckeinrichtung mittels mindestens einer Zubereitung zum Einbringen von Individualisierungsinformationen in den Laminationskörper; wobei der Dokumentenrohling mit einem Laminationskörper bereitgestellt wird, der zumindest in einem Individualisierungsbereich in einer an die mindestens eine Außenfläche angrenzenden äußeren Materialschicht eine Vielzahl die äußere Materialschicht bis zu einer Informationsschicht durchdringende Perforationsöffnungen aufweist, und die Individualisierungsinformationen so auf die Außenfläche aufgedruckt werden, dass zumindest ein Teil der Individualisierungsinformationen durch die Perforationsöffnungen hindurch auf die Informationsschicht gedruckt wird. Ferner ist ein System zur Individualisierung von Dokumenten beschrieben, umfassend: einen oder mehrere Dokumentrohlinge mit einem Laminationskörper; eine digitale Druckeinrichtung, wobei der Laminationskörper eine an eine Außenseite angrenzende Materialschicht mit Perforationsöffnungen aufweist, die diese an die Außenfläche angrenzende äußere Schicht bis zu einer Informationsschicht durchdringen, und die Druckeinrichtung so ausgebildet sind, dass zumindest ein Teil der Individualisierungsinformationen durch die Perforationsöffnungen hindurch auf die Informationsschicht gedruckt wird.

Aus der DE 10 2007 052947 A1 ist die Verwendung einer Zubereitung, enthaltend A) 0,1 bis 20 Gew.-% eines Bindemittels mit einem Polycarbonatderivat auf Basis eines geminal disubstituierten Dihydroxydiphenylcycloalkans, B) 30 bis 99,9 Gew.-% eines organischen Lösungsmittels oder Lösungsmittelgemischs, C) 0 bis 10 Gew.-%, bezogen auf Trockenmasse, eines Farbmittels oder Farbmittelgemischs, D) 0 bis 10 Gew.-% eines funktionalen Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Tintenstrahldruckfarbe bekannt.

Aus der DE 10 2016 212 741 A1 ist zur Vermeidung erhöhten Ausschusses bei der Herstellung von Wert- oder Sicherheitsdokumenten, insbesondere von ID-Karten, und zur Erhöhung von deren Fälschungs- und Verfälschungssicherheit ein Verfahren zum Herstellen eines Wert- oder Sicherheitsproduktes bekannt. Das Verfahren umfasst folgende Verfahrensschritte: Bereitstellen eines Rohproduktkörpers und mindestens einer Polymerfolie; Bedrucken einer der Oberflächen der mindestens einen Polymerfolie mit mindestens einem Druckbild; (c) Zusammentragen des Rohproduktkörpers und der mindestens einen Polymerfolie zu einem Produktstapel, wobei die mit dem mindestens einen Druckbild bedruckte Oberfläche der mindestens einen Polymerfolie in Kontakt mit dem Rohproduktkörper gebracht wird; und (d) Laminieren des Produktstapels, sodass ein unlösbarer Verbund zwischen dem Rohproduktkörper und der mindestens einen Polymerfolie erzeugt wird.

Der Erfindung liegt die Aufgabe zu Grunde, ein Verfahren zum Herstellen eines Wert- oder Sicherheitsdokuments zu schaffen, mit dem eine Bedruckung verbessert gegen eine Manipulation geschützt werden kann.

Die Aufgabe wird erfindungsgemäß durch ein Verfahren mit den Merkmalen des Patentanspruchs 1 gelöst. Vorteilhafte Ausgestaltungen der Erfindung ergeben sich aus den Unteransprüchen.

Der Erfindung liegt der Gedanke zugrunde, eine auf einer außenliegenden Oberfläche einer Materialschicht aus Polycarbonat aufgebrachte Bedruckung zumindest teilweise in die Materialschicht hinein zu befördern und hierdurch gegen eine nachträgliche Manipulation, insbesondere im Wege eines chemischen Angriffs, abzusichern. Hierzu wird eine flächige thermische Nachbearbeitung des bedruckten Bereichs vorgenommen. Durch das flächige thermische Nachbearbeiten wird die Materialschicht zumindest im Bereich der Bedruckung in einen Erweichungszustand gebracht. Im Erweichungszustand des Polycarbonats kann ein Materialaustausch innerhalb der erweichten Bereiche stattfinden. Hierdurch wird es einem Farbmittel in mindestens einer Tintenzubereitung der Bedruckung ermöglicht, von der Oberfläche in die Materialschicht aus Polycarbonat hinein zu diffundieren bzw. zu migrieren. Im Gegensatz zu einer chemischen Nachbehandlung der Oberfläche wird insbesondere eine Oberflächentopographie der Oberfläche kaum verändert. Ferner diffundiert ein Farbmittel bei thermischer Nachbehandlung bevorzugt entlang eines Temperaturgradienten in die Materialschicht aus Polycarbonat hinein. Konturen der Bedruckung bleiben hierdurch scharf. Die mindestens eine Tintenzubereitung umfasst ein Bindemittel mit einem Polycarbonatderivat auf Basis eines geminal disubstituierten Dihydroxydiphenylcycloalkans und eignet sich deshalb besonders gut dazu, während des flächigen thermischen Nachbearbeitens in das sich im Erweichungszustand befindende Polycarbonat hinein zu diffundieren. Nach Durchführen des flächigen thermischen Nachbearbeitens der außenliegenden Oberfläche ist die in Form der Bedruckung ausgebildete Information nicht nur auf der Oberfläche selbst ausgebildet, sondern befindet sich zumindest teilweise innerhalb der Materialschicht aus Polycarbonat. Ein Schutz gegenüber einer Manipulation ist daher deutlich verbessert, da die Information bzw. die Bedruckung zur Fälschung nicht nur oberflächlich, sondern bis in die Materialschicht hinein verändert werden müsste. Der Dokumentkörper und das Wert- oder Sicherheitsdokument bzw. der Wert- oder Sicherheitsdokumentenrohling sind daher verbessert geschützt.

### Definitionen

Als Sicherheitsdokument werden jene Gegenstände bezeichnet, die mindestens ein Sicherheitsmerkmal aufweisen. Beispielhaft sind als Sicherheitsdokumente genannt: Personalausweise, Reisepässe, ID-Karten, Zugangskontrollausweise, Visa, Steuerzeichen, Tickets, Führerscheine, Kraftfahrzeugpapiere, Kreditkarten, beliebige Chipkarten und Haftetiketten (z.B. zur Produktsicherung). Solche Sicherheitsdokumente weisen typischerweise einen Dokumentkörper auf, der bei modernen Sicherheitsdokumenten aus einem oder mehreren Kunststoffmaterialien, vorzugsweise in Form einer Karte oder einer kartenartigen Seite zum Einbinden z.B. in ein Passbuch, ausgebildet sind. In den Dokumentkörper können weitere Materialien eingearbeitet sein.

Ein Wertdokument ist ein Sicherheitsdokument, dem gleichzeitig ein monetärer Wert zugeordnet werden kann, wie beispielsweise Banknoten, Schecks, Postwertzeichen.

Als Wert- oder Sicherheitsdokumentenrohling wird insbesondere ein noch nicht vollständig fertiggestelltes Wert- oder Sicherheitsdokument bezeichnet.

Als Dokumentkörper wird hier der physische Körper eines Sicherheitsdokuments bzw. ein physischer Bestandteil eines Sicherheitsdokuments, beispielsweise bei einem Reisepass, einer auf Kunststoffbasis hergestellte Identitätsseite verstanden.

Der Dokumentkörper kann eines der Formate ID 1, ID 2 oder ID 3 gemäß ISO/IEC 7810 haben. Im Allgemeinen handelt es sich bei dem Dokumentkörper um einen Kunststoffkörper, der beispielsweise durch ein Laminat aus mehreren Laminatlagen gebildet ist, die passgenau unter Wärmeeinwirkung und unter erhöhtem Druck flächig miteinander verbunden sind. Die Laminatlagen bestehen beispielsweise aus einem Material, das sich für eine Lamination eignet. Der Dokumentkörper kann aus einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis(hydroxyphenyl)-cycloalkan, Polyethylenterephthalat (PET), deren Derivate, wie Glykolmodifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, Polyamid (PA) und/oder Papier (Cellulose) und/oder Pappe und/oder ein Glas und/oder Metall und/oder eine Keramik. Außerdem kann der Dokumentkörper auch aus mehreren dieser Materialien hergestellt sein, insbesondere wenn dieser aus mehreren Lagen gebildet ist und die einzelnen Lagen aus unterschiedlichen Materialien gebildet sind. Bevorzugt besteht der Dokumentkörper aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Das Füllmaterial kann daher beispielsweise ein Pigment sein. Die Lagen können eingefärbt oder farblos sein. Die äußeren Lagen des Dokumentkörpers können insbesondere farblos transparent sein und eine hohe Abriebfestigkeit aufweisen. Grundsätzlich kann die Datenkarte auch durch (Co-)Extrusion hergestellt werden. Die Dicke des Dokumentkörpers beträgt vorzugsweise 250 bis 950 Mikrometer.

Ein Sicherheitsmerkmal ist jedes Merkmal, welches eine Nachahmung und/oder Verfälschung und/oder ein Duplizieren des Wert- oder Sicherheitsdokuments verhindert oder erschwert. Darüber hinaus sind Sicherheitsmerkmale auch solche Merkmale eines Sicherheitsdokuments, die eine Verifikation des Dokuments hinsichtlich seiner Echtheit und/oder einer Zuordnung zu einer Person und/oder einem Gegenstand ermöglichen.

Als individualisierend bzw. personalisierend wird eine Information angesehen, die einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise der Wohnort. Ein für eine Person individualisierender Code ist beispielsweise die Nummer des Personalausweises oder das Passbild. Ein für eine Gruppe von Geldscheinen innerhalb einer Gesamtmenge der Geldscheine individualisierender Code ist die Wertigkeit. Für einen Geldschein individualisierend ist die Seriennummer. Beispiele für nicht individualisierende Informationen sind beispielsweise ein Wappen, ein Siegel, ein Hoheitszeichen einer ausstellenden Behörde usw.

Als Materialschicht wird eine Volumenschicht angesehen, die eine im Wesentlichen homogene Beschaffenheit aufweist.

Insbesondere wird ein Verfahren zum Herstellen eines Wert- oder Sicherheitsdokuments oder eines Wert- oder Sicherheitsdokumentenrohlings zur Verfügung gestellt, umfassend die folgenden Schritte: Bereitstellen eines Dokumentkörpers, wobei der Dokumentkörper zumindest an einer außenliegenden Oberfläche eine Materialschicht aus Polycarbonat aufweist, wobei die Materialschicht auf der außenliegenden Oberfläche mit mindestens einer Tintenzubereitung bedruckt ist, welche ein Bindemittel mit einem Polycarbonatderivat auf Basis eines geminal disubstituierten Dihydroxydiphenylcycloalkans umfasst; flächiges thermisches Nachbehandeln der außenliegenden Oberfläche zumindest in dem bedruckten Bereich, sodass die Materialschicht in diesem bedruckten Bereich zumindest teilweise in einen Erweichungszustand gebracht wird und zumindest ein Farbmittel der mindestens einen Tintenzubereitung hierdurch zumindest teilweise in die Materialschicht hineindiffundiert.

Ferner wird insbesondere ein Wert- oder Sicherheitsdokument geschaffen, aber nicht beansprucht, umfassend einen Dokumentkörper, wobei der Dokumentkörper zumindest an einer außenliegenden Oberfläche eine Materialschicht aus Polycarbonat aufweist, und wobei die Materialschicht auf der außenliegenden Oberfläche mit mindestens einer Tintenzubereitung bedruckt ist, wobei die mindestens eine Tintenzubereitung ein Bindemittel mit einem Polycarbonatderivat auf Basis eines geminal disubstituierten Dihydroxydiphenylcycloalkans umfasst, und wobei sich zumindest ein Farbmittel der mindestens einen Tintenzubereitung im bedruckten Bereich zumindest teilweise innerhalb der mindestens einen Materialschicht befindet.

Weiter wird insbesondere ein Wert- oder Sicherheitsdokumentenrohling geschaffen, aber nicht beansprucht, umfassend einen Dokumentkörper, wobei der Dokumentkörper zumindest an einer außenliegenden Oberfläche eine Materialschicht aus Polycarbonat aufweist, und wobei die Materialschicht auf der außenliegenden Oberfläche mit mindestens einer Tintenzubereitung bedruckt ist, wobei die mindestens eine Tintenzubereitung ein Bindemittel mit einem Polycarbonatderivat auf Basis eines geminal disubstituierten Dihydroxydiphenylcycloalkans umfasst, und wobei sich zumindest ein Farbmittel der mindestens einen Tintenzubereitung im bedruckten Bereich zumindest teilweise innerhalb der mindestens einen Materialschicht befindet.

Ferner wird eine Gesamtheit aus Wert- und Sicherheitsdokumenten oder Wert- oder Sicherheitsdokumentenrohlingen geschaffen, aber nicht beansprucht, umfassend eine Vielzahl der beschriebenen Wert- oder Sicherheitsdokumente oder Wert- oder Sicherheitsdokumentenrohlinge, wobei jedes der Wert- oder Sicherheitsdokumente oder jeder der Wert- oder Sicherheitsdokumentenrohlinge individualisiert und/oder personalisiert ist.

Es kann insbesondere vorgesehen sein, dass die Bedruckung eine den Dokumentkörper individualisierende oder personalisierende Information umfasst.

Das Verfahren ist insbesondere Teil eines Verfahrens zum Herstellen eines individualisierten und/oder personalisierten Wert- oder Sicherheitsdokuments oder Wert- oder Sicherheitsdokumentenrohlings, wobei dann zusätzlich das Bedrucken zumindest eines Bereichs der außenliegenden Oberfläche mit einer individualisierenden und/oder personalisierenden Information mit mindestens einer Tintenzubereitung mittels einer Druckvorrichtung durchgeführt wird, wobei die mindestens eine Tintenzubereitung ein Bindemittel mit einem Polycarbonatderivat auf Basis eines geminal disubstituierten Dihydroxydiphenylcycloalkans umfasst. Insbesondere werden diese Verfahrensschritte auf einer nicht beanspruchten Vorrichtung zum Herstellen eines individualisierten und/oder personalisierten Wert- oder Sicherheitsdokuments oder Wert- oder Sicherheitsdokumentenrohlings durchgeführt, wobei die Vorrichtung mindestens eine Druckvorrichtung zum Bedrucken zumindest eines Bereichs einer außenliegenden Oberfläche einer Materialschicht aus Polycarbonat eines bereitgestellten Dokumentenkörpers mit der mindestens einen Tintenzubereitung und eine Nachbehandlungseinrichtung zum flächigen thermischen Nachbehandeln der außenliegenden Oberfläche zumindest in dem bedruckten Bereich umfasst, sodass die Materialschicht in diesem bedruckten Bereich zumindest teilweise in einen Erweichungszustand gebracht werden kann und zumindest ein Farbmittel der mindestens einen Tintenzubereitung hierdurch zumindest teilweise in die Materialschicht hineindiffundieren kann. Insbesondere kann hierbei vorgesehen sein, dass die Vorrichtung dezentral eingesetzt wird, das heißt um vor Ort eine Individualisierung und/oder Personalisierung eines Wert- oder Sicherheitsdokuments vornehmen zu können.

Das Bedrucken wird oder wurde bevorzugt mittels einer Druckvorrichtung durchgeführt, welche digital arbeitet. Hierbei wird ein Druckkopf über die Materialschicht geführt oder die Materialschicht wird an einem ortsfesten Druckkopf vorbeigeführt. Eine Steuerung steuert dann den gezielten Auftrag der mindestens einen Tintenzubereitung in Abhängigkeit von Bilddaten. Bei einer solchen Druckvorrichtung ist es insbesondere möglich, die Informationen, welche verdruckt werden sollen, beliebig zu gestalten. So kann eine Bedruckung mit individualisierten Bilddaten für jedes zu bedruckende Wert- oder Sicherheitsdokument bzw. jeden Dokumentkörper umgesetzt werden.

Bei einer bevorzugten Ausführungsform ist ferner vorgesehen, dass die Bedruckung mindestens eine weitere Tintenzubereitung aufweist, wobei die mindestens eine Tintenzubereitung und die mindestens eine weitere Tintenzubereitung der Bedruckung unterschiedliche Farbeindrücke hervorrufen. Auf diese Weise lassen sich mehrfarbige Informationen auf die außenliegende Oberfläche der Materialschicht aufdrucken. Insbesondere kann beispielsweise vorgesehen sein, mehrfarbige Schriftzüge und/oder Symbole aufzudrucken. Es ist ferner möglich, auch mehrfarbige Bilder, beispielsweise fotografische Abbildungen, zu verdrucken.

Insbesondere kann vorgesehen sein, dass wie beim Vierfarbendruck vier Tintenzubereitungen verwendet werden, beispielsweise Tintenzubereitungen, welche die Farbeindrücke Cyan, Magenta, Gelb und Schwarz hervorrufen, so dass ein CMYK-Farbraum zur Verfügung gestellt werden kann. Ferner kann darüber hinaus auch vorgesehen sein, Tintenzubereitungen mit Sonderfarben oder funktionellen Farben, bereitzustellen.

In einer Ausführungsform ist vorgesehen, dass eine Dauer des flächigen thermischen Nachbehandelns derart gewählt ist oder wird, dass eine vorbestimmte mittlere Eindringtiefe des Farbmittels der mindestens einen Tintenzubereitung erreicht wird. Beispielsweise wird die Dauer derart gewählt, dass eine mittlere Eindringtiefe mindestens einen Wert von 5, 10, 20 oder 50 Mikrometern beträgt. Eine Abhängigkeit der Eindringtiefen von einer Dauer des flächigen thermischen Nachbehandelns kann beispielsweise empirisch oder durch Simulation ermittelt werden. Als mittlere Eindringtiefe wird hierbei eine über den thermisch nachbehandelten Bereich der Bedruckung gemittelte Eindringtiefe des Farbmittels der mindestens einen Tintenzubereitung verstanden. Hierzu wird die Eindringtiefe an verschiedenen Positionen unterhalb der außenliegenden Oberfläche ermittelt und dann in Bezug auf die jeweils zugehörigen Flächen gemittelt. Die Eindringtiefe ist beispielsweise die Tiefe unterhalb der außenliegenden Oberfläche, bis zu der ein vorbestimmter Anteil des Farbmittels gelangt oder nachweisbar ist. Eine vorbestimmte mittlere Eindringtiefe kann auch dazu verwendet werden, später festzustellen, ob ein Wert- oder Sicherheitsdokument echt ist oder nicht. Hierzu wird das Wert- oder Sicherheitsdokument beispielsweise im Querschnitt angeschliffen und die mittlere Eindringtiefe im Querschliff bestimmt.

Eine Dauer des flächigen thermischen Nachbehandelns beträgt insbesondere zwischen 5 Sekunden und 3 Minuten, je nachdem, welche Eindringtiefe erreicht werden soll.

Insbesondere ist in einer Ausführungsform vorgesehen, dass die vorbestimmte mittlere Eindringtiefe mindestens 5 Mikrometer beträgt. Hierdurch ist eine Mindestabriebfestigkeit und eine Mindestsicherheit gegen eine oberflächliche Manipulation gewährleistet. Alternativ können auch Eindringtiefen von 10, 20 oder 50 Mikrometern vorgesehen sein.

In einer Ausführungsform ist vorgesehen, dass das flächige thermische Nachbehandeln mittels eines Heizstempels durchgeführt wird. Hierbei sind ein Druck und eine Temperatur während des flächigen thermischen Nachbehandelns mittels des Heizstempels derart gewählt, dass der Erweichungszustand erreicht wird. Zum flächigen thermischen Nachbehandeln wird der flächig ausgebildete Heizstempel mit der außenliegenden Oberfläche der Materialschicht aus Polycarbonat in Kontakt gebracht. Durch Aufbringen von Druck und Wärme wird die Materialschicht erwärmt und hierdurch in den Erweichungszustand gebracht. Ein Farbmittel der mindestens einen Tintenzubereitung des bedruckten Bereichs auf der außenliegenden Oberfläche diffundiert dann in die Materialschicht hinein.

Der Heizstempel kann beispielsweise in Form einer Laminationspresse bereitgestellt werden. Auch kann vorgesehen sein, dass das flächige thermische Nachbehandeln in Form eines den zum Ausbilden des Dokumentkörpers vorgesehenen Laminationsschritten nachfolgenden weiteren Laminationsschritt durchgeführt wird.

Das Verwenden eines Heizstempels hat den Vorteil, dass eine der außenliegenden Oberfläche der Materialschicht aus Polycarbonat zugewandte Seite des Heizstempels, welche beim Nachbehandeln mit der außenliegenden Oberfläche in Kontakt steht, eben und glatt ausgebildet sein kann. Hierdurch kann erreicht werden, dass die außenliegende Oberfläche der Materialschicht nach dem flächigen thermischen Nachbehandeln ebenfalls eben und glatt ausgebildet ist.

Es kann jedoch auch zusätzlich vorgesehen sein, dass der Heizstempel an einer der außenliegenden Oberfläche beim flächigen thermischen Nachbehandeln zugewandten Seite ein Relief aufweist und mittels des Reliefs zusätzlich während des flächigen thermischen Nachbehandelns ein weiteres Sicherheitsmerkmal auf der außenliegenden Oberfläche der Materialschicht ausgebildet wird. Das weitere Sicherheitsmerkmal ist insbesondere ein zu dem Relief komplementär ausgebildetes Relief, beispielsweise ein Muster. Ein solches weiteres Sicherheitsmerkmal in Form eines auf der außenliegenden Oberfläche der Materialschicht ausgebildeten Reliefs sorgt für eine zusätzliche Fälschungssicherheit.

In einer Ausführungsform des Wert- oder Sicherheitsdokument oder des Wert- oder Sicherheitsdokumentenrohlings ist entsprechend vorgesehen, dass die Materialschicht an der außenliegenden Oberfläche ein weiteres Sicherheitsmerkmal in Form eines Reliefs aufweist.

In einer Ausführungsform ist vorgesehen, dass der Druck im Bereich von 3 bis 100 Newton pro Quadratzentimeter liegt und die Temperatur im Bereich von 120°C bis 200°C liegt. Diese Parameterbereiche haben sich als günstig zur Nachbearbeitung der Materialschicht aus Polycarbonat erwiesen, da Polycarbonat in diesem Bereich in einen Erweichungszustand gebracht werden kann und trotzdem weitgehend formstabil bleibt.

In einer bevorzugten Ausführungsform ist vorgesehen, dass der Druck im Bereich von 10 bis 30 Newton pro Quadratzentimeter liegt und die Temperatur im Bereich von 140°C bis 180°C liegt. Diese Parameterbereiche haben sich als vorteilhaft erwiesen, da eine Diffusion der mindestens einen Tintenzubereitung gleichmäßig erfolgt und deshalb gut gesteuert werden kann.

In einer anderen Ausführungsform ist vorgesehen, dass das flächige thermische Nachbehandeln mittels einer Ultraschallsonotrode durchgeführt wird. Hierbei sind eine Frequenz und eine Leistung eines Ultraschalls während des flächigen thermischen Nachbehandelns derart gewählt, dass der Erweichungszustand erreicht wird. Zum flächigen thermischen Nachbehandeln wird die Ultraschallsonotrode mit der außenliegenden Oberfläche der Materialschicht aus Polycarbonat in Kontakt gebracht. Durch Einwirken des Ultraschalls auf der außenliegenden Oberfläche der Materialschicht wird diese erwärmt und hierdurch in den Erweichungszustand gebracht. Ein Farbmittel der mindestens einen Tintenzubereitung des bedruckten Bereichs auf der außenliegenden Oberfläche diffundiert dann in die Materialschicht hinein.

In einer Ausführungsform ist vorgesehen, dass die Frequenz des Ultraschalls im Bereich von 20 kHz bis 70 kHz liegt und eine Leistung im Bereich von 50 bis 250 Watt pro Quadratzentimeter liegt. Innerhalb dieser Parameterbereiche können besonders gute Ergebnisse bei der Diffusion des Farbmittels in die Materialschicht erzielt werden.

In einer weiterbildenden Ausführungsform ist vorgesehen, dass die Ultraschallsonotrode an einer der außenliegenden Oberfläche beim flächigen thermischen Nachbehandeln zugewandten Seite eine Oberflächenstruktur in Form einer zweidimensionalen Sägezahnstruktur aufweist. Hierdurch kann beim flächigen thermischen Nachbehandeln eine Ultraschallenergie gleichmäßiger verteilt werden. Ferner kann hierdurch an der außenliegenden Oberfläche ein dreidimensionaler Oberflächeneffekt im Bereich der Bedruckung erzeugt werden. Insbesondere ist die Sägezahnstruktur in Bezug auf eine ansteigende und eine absteigende Flanke symmetrisch ausgebildet und weist bevorzugt eine Periode von 0,2 mm und eine Spitze-zu-Spitze-Amplitude von 0,1 mm auf.

In einer Ausführungsform ist vorgesehen, dass die Ultraschallsonotrode an einer der außenliegenden Oberfläche beim flächigen thermischen Nachbehandeln zugewandten Seite ein Relief aufweist und mittels des Reliefs zusätzlich während des flächigen thermischen Nachbehandelns ein weiteres Sicherheitsmerkmal auf der außenliegenden Oberfläche der Materialschicht ausgebildet wird. Das weitere Sicherheitsmerkmal ist insbesondere ein zu dem Relief komplementär ausgebildetes Relief, beispielsweise ein Muster. Ein solches weiteres Sicherheitsmerkmal in Form eines auf der außenliegenden Oberfläche der Materialschicht ausgebildeten Reliefs sorgt für eine zusätzliche Fälschungssicherheit.

In einer Ausführungsform ist vorgesehen, dass der bedruckte Bereich zusätzlich zumindest teilweise mittels eines Lasers bearbeitet, insbesondere graviert, wird. Insbesondere können bei einem CMYK-Vierfarbdruck die K-Anteile graviert sein und hierdurch ein Druckbild verbessert werden. Die Lasergravur bietet darüber hinaus eine zusätzliche Erhöhung der Fälschungssicherheit, da die gravierten Bereiche besser gegen eine Manipulation geschützt sind.

In einer Ausführungsform des Wert- oder Sicherheitsdokuments oder des Wert- oder Sicherheitsdokumentenrohlings ist entsprechend vorgesehen, dass der bedruckte Bereich zusätzlich zumindest teilweise mittels eines Lasers bearbeitet, insbesondere graviert, ist.

In einer weiteren Ausführungsform ist vorgesehen, dass das flächige thermische Nachbehandeln für unterschiedliche bedruckte Bereiche auf der außenliegenden Oberfläche der Materialschicht in unterschiedlicher Weise durchgeführt wird. Insbesondere werden unterschiedliche Parameter beim flächigen thermischen Nachbehandeln für diese unterschiedlichen bedruckten Bereiche verwendet. Hierdurch kann insbesondere eine unterschiedliche Eindringtiefe eines Farbmittels der mindestens einen Tintenzubereitung erreicht werden. Dies erfolgt beispielsweise, indem für ansonsten gleich gewählte Parameter, z.B. Druck und Temperatur oder Frequenz und Leistung, eine unterschiedliche Dauer für das flächige thermische Nachbearbeiten gewählt wird. Beispielsweise wird für einen bedruckten Bereich eine Eindringtiefe von 5 Mikrometern gewählt, für einen anderen bedruckten Bereich eine Eindringtiefe von 20 Mikrometern. Alternativ hierzu kann bei ansonsten gleich gewählten Parametern auch eine unterschiedliche Temperatur in den unterschiedlichen bedruckten Bereichen gewählt werden. Entsprechend weist das Wert- oder Sicherheitsdokument oder der Wert- oder Sicherheitsdokumentenrohling in unterschiedlichen Bereichen der Bedruckung eine unterschiedliche Eindringtiefe des Farbmittels der mindestens einen Tintenzubereitung auf. Die unterschiedlichen Eindringtiefen lassen sich im Dokumentkörper bzw. im fertigen Wert- oder Sicherheitsdokument bzw. im Wert- oder Sicherheitsdokumentenrohling entsprechend nachweisen, sodass hierüber eine Echtheit festgestellt werden kann, beispielsweise indem der Dokumentkörper aufgeschnitten wird und die Eindringtiefen der Tintenzubereitung bzw. des Farbmittels im Querschnitt bestimmt und verifiziert werden. Durch die unterschiedlichen Eindringtiefen kann eine Fälschungssicherheit des Dokumentkörpers bzw. des Wert- oder Sicherheitsdokuments weiter verbessert werden.

In einer weiterbildenden Ausführungsform kann vorgesehen sein, dass die Eindringtiefen in Abhängigkeit einer von der Bedruckung umfassten individualisierenden und/oder personalisierenden Information gewählt werden.

Nachfolgend wird die Erfindung anhand bevorzugter Ausführungsbeispiele unter Bezugnahme auf die Figuren näher erläutert. Hierbei zeigen:
- Fig. 1a bis 1c: schematisch einzelne Verfahrensschritte einer Ausführungsform des Verfahrens zum Herstellen eines Wert- oder Sicherheitsdokuments;
- Fig. 2a bis 2c: schematisch einzelne Verfahrensschritte einer weiteren Ausführungsform des Verfahrens zum Herstellen eines Wert- oder Sicherheitsdokuments.

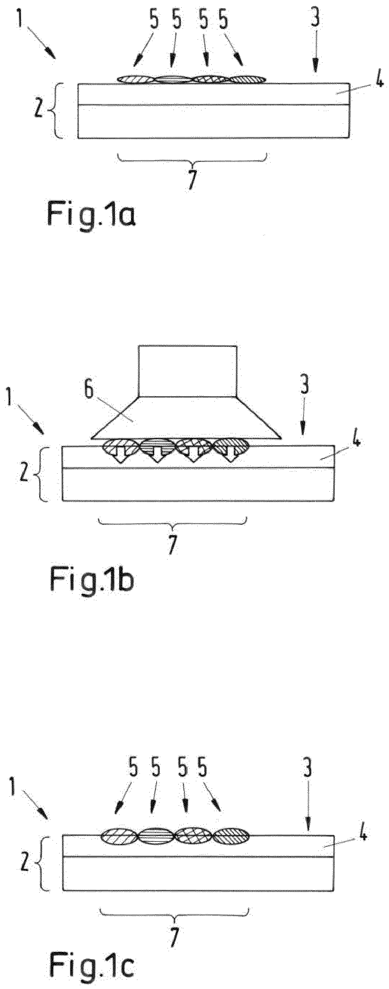

Die Figuren 1a bis 1c zeigen schematisch einzelne Verfahrensschritte einer Ausführungsform des Verfahrens zum Herstellen eines Wert- oder Sicherheitsdokuments 1.

In einem ersten Verfahrensschritt wird ein Dokumentkörper 2 bereitgestellt (Fig. 1a), wobei der Dokumentkörper 2 zumindest an einer außenliegenden Oberfläche 3 eine Materialschicht 4 aus Polycarbonat aufweist, wobei die Materialschicht 4 auf der außenliegenden Oberfläche 3 mit mindestens einer Tintenzubereitung 5 bedruckt ist, welche ein Bindemittel mit einem Polycarbonatderivat auf Basis eines geminal disubstituierten Dihydroxydiphenylcycloalkans umfasst. In der gezeigten Ausführungsform umfasst die Bedruckung vier Tintenzubereitungen 5, welche beispielsweise den CMYK-Farben entsprechen. Hierdurch können insbesondere farbige Bilder, beispielsweise in Form von Passbildern, dargestellt werden.

Im nachfolgenden Verfahrensschritt, gezeigt in Fig. 1b, wird die außenliegende Oberfläche 3 zumindest in dem bedruckten Bereich 7 thermisch nachbehandelt, sodass die Materialschicht 4 in diesem bedruckten Bereich 7 zumindest teilweise in einen Erweichungszustand gebracht wird und Farbmittel der vier Tintenzubereitungen 5 hierdurch zumindest teilweise in die Materialschicht 4 hineindiffundieren können.

In der gezeigten Ausführungsform erfolgt das flächige thermische Nachbehandeln mittels eines Heizstempels 6, wobei ein Druck und eine Temperatur während des flächigen thermischen Nachbehandelns mittels des Heizstempels 6 derart gewählt sind, dass der Erweichungszustand der Materialschicht 4 aus Polycarbonat erreicht wird.

Insbesondere wird ein Druck von 3 bis 100 Newton pro Quadratzentimeter, bevorzugt von 10 bis 30 Newton pro Quadratzentimeter, und eine Temperatur im Bereich von 120°C bis 200°C, bevorzugt von 140°C bis 180°C, gewählt. Eine Dauer des flächigen thermischen Nachbehandelns beträgt insbesondere zwischen 5 Sekunden und 3 Minuten, je nachdem, welche Eindringtiefe erreicht werden soll. Eine Eindringtiefe beträgt insbesondere 5 bis 50 Mikrometer.

Anschließend wird der Heizstempel 6 wieder entfernt, sodass sich die vier Tintenzubereitungen 5 in dem fertigen Dokumentkörper 2 zumindest teilweise auch unterhalb der außenliegenden Oberfläche 3 innerhalb der Materialschicht 4 befinden (Fig. 1c).

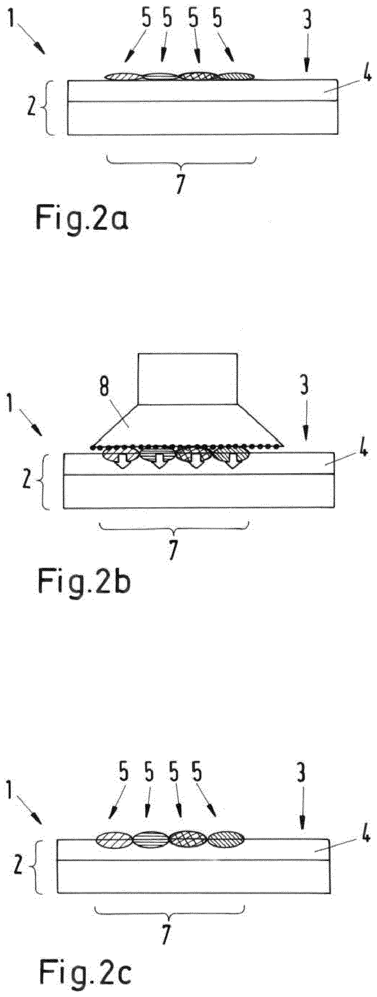

Die Figuren 2a bis 2c zeigen schematisch einzelne Verfahrensschritte einer weiteren Ausführungsform des Verfahrens zum Herstellen eines Wert- oder Sicherheitsdokuments 1. Prinzipiell ist die Vorgehensweise die gleiche wie bei der in den Figuren 1a bis 1c gezeigten Ausführungsform.

In einem ersten Verfahrensschritt wird ein Dokumentkörper 2 bereitgestellt (Fig. 2a), wobei der Dokumentkörper 2 zumindest an einer außenliegenden Oberfläche 3 eine Materialschicht 4 aus Polycarbonat aufweist, wobei die Materialschicht 4 auf der außenliegenden Oberfläche 3 mit mindestens einer Tintenzubereitung 5 bedruckt ist, welche ein Bindemittel mit einem Polycarbonatderivat auf Basis eines geminal disubstituierten Dihydroxydiphenylcycloalkans umfasst. In der gezeigten Ausführungsform umfasst die Bedruckung vier Tintenzubereitungen 5, welche beispielsweise jeweils einer der CMYK-Farben entsprechen.

Im nachfolgenden Verfahrensschritt, gezeigt in Fig. 2b, wird die außenliegende Oberfläche 3 zumindest in dem bedruckten Bereich 7 thermisch nachbehandelt, sodass die Materialschicht 4 in diesem bedruckten Bereich 7 zumindest teilweise in einen Erweichungszustand gebracht wird und Farbmittel der vier Tintenzubereitungen 5 hierdurch zumindest teilweise in die Materialschicht 4 hineindiffundieren können.

In der gezeigten Ausführungsform erfolgt das flächige thermische Nachbehandeln mittels einer Ultraschallsonotrode 8, wobei eine Frequenz und eine Leistung eines Ultraschalls während des flächigen thermischen Nachbehandelns derart gewählt sind oder werden, dass der Erweichungszustand der Materialschicht 4 aus Polycarbonat erreicht wird.

Insbesondere wird die Frequenz des Ultraschalls im Bereich von 20 kHz bis 70 kHz und die Leistung im Bereich von 50 bis 250 Watt pro Quadratzentimeter gewählt. Eine Dauer des flächigen thermischen Nachbehandelns beträgt insbesondere zwischen 5 Sekunden und 3 Minuten, je nachdem, welche Eindringtiefe erreicht werden soll. Eine Eindringtiefe beträgt insbesondere 5 bis 50 Mikrometer.

Anschließend wird die Ultraschallsonotrode 8 wieder entfernt, sodass sich die vier Tintenzubereitungen 5 in dem fertigen Dokumentkörper 2 zumindest teilweise auch unterhalb der außenliegenden Oberfläche 3 innerhalb der Materialschicht 4 befinden (Fig. 2c).

Es kann zusätzlich vorgesehen sein, dass die Ultraschallsonotrode 8 an einer der außenliegenden Oberfläche 3 beim flächigen thermischen Nachbehandeln zugewandten Seite ein Relief aufweist und mittels des Reliefs zusätzlich während des flächigen thermischen Nachbehandelns ein weiteres Sicherheitsmerkmal auf der außenliegenden Oberfläche 3 der Materialschicht 4 ausgebildet wird.

Ausführungsformen für das Herstellen des Wert- oder Sicherheitsdokumentenrohlings sind insbesondere analog zu denen, die in den Figuren 1a bis 1c bzw. 2a bis 2c gezeigt sind. Anschließend kann der Wert- oder Sicherheitsdokumentenrohling insbesondere in weiteren Schritten zum Herstellen eines fertigen Wert- oder Sicherheitsdokuments weiterbearbeitet werden. Beispielsweise können weitere Markierungen, weitere Materialschichten oder weitere Sicherheitsmerkmale aufgebracht werden.

Die gezeigten Verfahrensschritte können insbesondere Teil eines Verfahrens zum Herstellen eines individualisierten und/oder personalisierten Wert- oder Sicherheitsdokuments 1 oder Wert- oder Sicherheitsdokumentenrohlings sein, wobei dann zusätzlich das Bedrucken zumindest eines Bereichs der außenliegenden Oberfläche 3 mit einer individualisierenden und/oder personalisierenden Information mit mindestens einer Tintenzubereitung 5 mittels einer Druckvorrichtung durchgeführt wird, wobei die mindestens eine Tintenzubereitung 5 ein Bindemittel mit einem Polycarbonatderivat auf Basis eines geminal disubstituierten Dihydroxydiphenylcycloalkans umfasst.

Insbesondere werden diese Verfahrensschritte dann auf einer Vorrichtung zum Herstellen eines individualisierten und/oder personalisierten Wert- oder Sicherheitsdokuments 1 oder Wert- oder Sicherheitsdokumentenrohlings durchgeführt, wobei die Vorrichtung mindestens eine Druckvorrichtung zum Bedrucken zumindest eines Bereichs 7 einer außenliegenden Oberfläche 3 einer Materialschicht 4 aus Polycarbonat eines bereitgestellten Dokumentenkörpers 2 mit einer individualisierenden und/oder personalisierenden Information mit der mindestens einen Tintenzubereitung 5 und eine Nachbehandlungseinrichtung, beispielsweise ein Heizstempel 6 oder eine Ultraschallsonotrode 8, zum flächigen thermischen Nachbehandeln der außenliegenden Oberfläche 3 zumindest in dem bedruckten Bereich 7 umfasst, sodass die Materialschicht 4 in diesem bedruckten Bereich 7 zumindest teilweise in einen Erweichungszustand gebracht werden kann und zumindest ein Farbmittel der mindestens einen Tintenzubereitung 5 hierdurch zumindest teilweise in die Materialschicht 4 hineindiffundieren kann.

Insbesondere kann hierbei vorgesehen sein, dass die Vorrichtung dezentral eingesetzt wird, das heißt um vor Ort eine Individualisierung und/oder Personalisierung eines Wert- oder Sicherheitsdokuments 1, beispielsweise durch Bedrucken mit einem Passbild, vornehmen zu können.

### Bezugszeichenliste

- 1: Wert- oder Sicherheitsdokument
- 2: Dokumentkörper
- 3: außenliegende Oberfläche
- 4: Materialschicht
- 5: Tintenzubereitung
- 6: Heizstempel
- 7: bedruckter Bereich
- 8: Ultraschallsonotrode
- 9: Teilbereich

## Patentansprüche

1. Verfahren zum Herstellen eines Wert- oder Sicherheitsdokuments (1) oder eines Wert- oder Sicherheitsdokumentenrohlings, umfassend die folgenden Schritte:
- Bereitstellen eines Dokumentkörpers (2), wobei der Dokumentkörper (2) zumindest an einer außenliegenden Oberfläche (3) eine Materialschicht (4) aus Polycarbonat aufweist, wobei die Materialschicht (4) auf der außenliegenden Oberfläche (3) mit mindestens einer Tintenzubereitung (5) bedruckt ist, welche ein Bindemittel mit einem Polycarbonatderivat auf Basis eines geminal disubstituierten Dihydroxydiphenylcycloalkans umfasst,
- flächiges thermisches Nachbehandeln der außenliegenden Oberfläche (3) zumindest in dem bedruckten Bereich (7), sodass die Materialschicht (4) in diesem bedruckten Bereich (7) zumindest teilweise in einen Erweichungszustand gebracht wird und zumindest ein Farbmittel der mindestens einen Tintenzubereitung (5) hierdurch zumindest teilweise in die Materialschicht (4) hineindiffundiert.

2. Verfahren nach Anspruch 1, **dadurch gekennzeichnet, dass** eine Dauer des flächigen thermischen Nachbehandelns derart gewählt ist oder wird, dass eine vorbestimmte mittlere Eindringtiefe des Farbmittels der mindestens einen Tintenzubereitung (5) erreicht wird.

3. Verfahren nach einem der Ansprüche 1 oder 2, **dadurch gekennzeichnet, dass** das flächige thermische Nachbehandeln mittels eines Heizstempels (6) durchgeführt wird.

4. Verfahren nach Anspruch 3, **dadurch gekennzeichnet, dass** der Druck im Bereich von 3 bis 100 Newton pro Quadratzentimeter liegt und die Temperatur im Bereich von 120°C bis 200°C liegt.

5. Verfahren nach Anspruch 4, **dadurch gekennzeichnet, dass** der Druck im Bereich von 10 bis 30 Newton pro Quadratzentimeter liegt und die Temperatur im Bereich von 140°C bis 180°C liegt.

6. Verfahren nach einem der Ansprüche 1 oder 2, **dadurch gekennzeichnet, dass** das flächige thermische Nachbehandeln mittels einer Ultraschallsonotrode (8) durchgeführt wird.

7. Verfahren nach Anspruch 6, **dadurch gekennzeichnet, dass** die Frequenz des Ultraschalls im Bereich von 20 kHz bis 70 kHz liegt und eine Leistung im Bereich von 50 bis 250 Watt pro Quadratzentimeter liegt.

8. Verfahren nach Anspruch 6 oder 7, **dadurch gekennzeichnet, dass** die Ultraschallsonotrode (8) an einer der außenliegenden Oberfläche (3) beim flächigen thermischen Nachbehandeln zugewandten Seite ein Relief aufweist und mittels des Reliefs zusätzlich während des flächigen thermischen Nachbehandelns ein weiteres Sicherheitsmerkmal auf der außenliegenden Oberfläche (3) der Materialschicht (4) ausgebildet wird.

9. Verfahren nach einem der vorangegangenen Ansprüche, **dadurch gekennzeichnet, dass** der bedruckte Bereich (7) zusätzlich zumindest teilweise mittels eines Lasers bearbeitet, insbesondere graviert, wird.

## Claims

1. Method for producing a security document (1) or a security document blank, comprising the following steps:
- providing a document body (2), wherein the document body (2) has at least a material layer (4) made of polycarbonate on an outer surface (3), wherein the material layer (4) on the outer surface (3) is printed with at least one ink preparation (5) which comprises a binder with a polycarbonate derivative based on a geminal disubstituted dihydroxydiphenylcycloalkane,
- subsequent thermal treatment of the entire surface of the outer surface (3) at least in the printed area (7), so that the material layer (4) in this printed area (7) is at least partially brought into a softened state and at least one colorant of the at least one ink preparation (5) thereby diffuses at least partially into the material layer (4).

2. Method according to claim 1, **characterized in that** a duration of the surface thermal post-treatment is or will be selected such that a predetermined average penetration depth of the colorant of the at least one ink preparation (5) is achieved.

3. Method according to one of claims 1 or 2, **characterized in that** the surface-area thermal post-treatment is carried out by means of a heating stamp (6).

4. Method according to claim 3, **characterized in that** the pressure is in the range of 3 to 100 newtons per square centimeter and the temperature is in the range of 120°C to 200°C.

5. Method according to claim 4, **characterized in that** the pressure is in the range of 10 to 30 newtons per square centimeter and the temperature is in the range of 140°C to 180°C.

6. Method according to one of claims 1 or 2, **characterized in that** the flat thermal post-treatment is carried out using an ultrasonic sonotrode (8).

7. Method according to claim 6, **characterized in that** the frequency of the ultrasound is in the range from 20 kHz to 70 kHz and the power is in the range from 50 to 250 watts per square centimeter.

8. Method according to claim 6 or 7, **characterized in that** the ultrasonic sonotrode (8) has a relief on one of the outer surfaces (3) facing the side during the surface thermal post-treatment, and by means of the relief, a further security feature is additionally formed on the outer surface (3) of the material layer (4) during the flat thermal post-treatment.

9. Method according to one of the preceding claims, **characterized in that** the printed area (7) is additionally at least partially processed, in particular engraved, by means of a laser.

## Revendications

1. Procédé de fabrication d'un document de valeur ou de sécurité (1) ou d'un document vierge de valeur ou de sécurité, comprenant les étapes suivantes:
- mise à disposition d'un corps de document (2), le corps de document (2) présentant au moins une couche de matériau (4) en polycarbonate sur une surface extérieure (3), la couche de matériau (4) sur la surface extérieure (3) étant imprimée avec au moins une préparation d'encre (5) qui comprend un liant avec un dérivé de polycarbonate à base d'un dihydroxydiphénylcycloalcane disubstitué en position géminale,
- post-traitement thermique de surface de la surface extérieure (3) au moins dans la zone imprimée (7), de sorte que la couche de matériau (4) dans cette zone imprimée (7) soit au moins partiellement amenée à un état de ramollissement et qu'au moins un colorant de la au moins une préparation d'encre (5) diffuse ainsi au moins partiellement dans la couche de matériau (4).

2. Procédé selon la revendication 1, **caractérisé en ce qu'**une durée du post-traitement thermique de surface est ou sera choisie de telle sorte qu'une profondeur de pénétration moyenne prédéterminée du colorant de la au moins une préparation d'encre (5) soit atteinte.

3. Procédé selon l'une des revendications 1 ou 2, **caractérisé en ce que** le post-traitement thermique de surface est effectué à l'aide d'un tampon chauffant (6).

4. Procédé selon la revendication 3, **caractérisé en ce que** la pression est comprise entre 3 et 100 newtons par centimètre carré et la température entre 120 °C et 200 °C.

5. Procédé selon la revendication 4, **caractérisé en ce que** la pression est comprise entre 10 et 30 newtons par centimètre carré et la température est comprise entre 140 °C et 180 °C.

6. Procédé selon l'une des revendications 1 ou 2, **caractérisé en ce que** le traitement thermique de surface est effectué à l'aide d'une sonotrode à ultrasons (8).

7. Procédé selon la revendication 6, **caractérisé en ce que** la fréquence des ultrasons est comprise entre 20 kHz et 70 kHz et la puissance est comprise entre 50 et 250 watts par centimètre carré.

8. Procédé selon la revendication 6 ou 7, **caractérisé en ce que** la sonotrode à ultrasons (8) présente un relief sur l'une des surfaces extérieures (3) du côté tourné vers le post-traitement thermique de surface et qu'un autre élément de sécurité est formé sur la surface extérieure (3) de la couche de matériau (4) au moyen du relief pendant le post-traitement thermique.

9. Procédé selon l'une des revendications précédentes, **caractérisé en ce que** la zone imprimée (7) est en outre au moins partiellement traitée, en particulier gravée, au moyen d'un laser.
